# EUROPEAN PATENT SPECIFICATION

(11) **EP 0 771 341 B1**
(45) Date of publication and mention of the grant of the patent: **08.09.2004**
(21) Application number: 95923528.4
(22) Date of filing: 18.07.1995
(51) Int. Cl.: C09D 11/00, D06P 1/00

(54) **INK FOR CONTINUOUS INK JET PRINTING**
TINTE FÜR KONTINUIERLICHEN TINTENSTRAHLDRUCK
ENCRE DESTINE A L'IMPRESSION A JET D'ENCRE EN CONTINU

(30) Priority: 19.07.1994 CH 228794
(43) Date of publication of application: 07.05.1997
(73) Proprietor: SICPA HOLDING S.A., 1008 Prilly (CH)
(72) Inventor: AMON, Albert, Ch-1005 Lausanne (CH); BOKSANYI, Laszlo, CH-1093 La Conversion (CH); GRUFFEL, Pascal, CH-1376 Goumeons-la-Ville (CH)
(74) Representative: Hepp, Dieter
(86) International application number: PCT/IB1995/000567
(87) International publication number: WO 1996/002599

(56) References cited:
- EP-A- 0 534 428
- EP-A- 0 556 650
- EP-A- 0 604 822
- GB-A- 2 184 742

## Description

### Background of the Invention

The present invention is related to an ink which is appropriate and destined for the continuous ink jet printing and which contains water as the major liquid component.

Ink jet printing with continuous generation of droplets, the so-called continuous ink jet printing process, is used in a wide extent for producing professional sample printings. The advantage of this method consists mainly in the high resolution at a sufficient speed which results from the high rates of droplets which can be generated per second. Common are rates up to 100'000 Hz, i. e. 100'000 droplets per second.

In this process, a continuous stream of droplets is generated from which droplets are deflected in a controlled manner and made to impinge onto a surface to be printed, and/or the remaining droplets are deflected on a wall surface from where they flow to a collecting vessel. The ink is pressed through a fine nozzle which is mechanically coupled to a piezoelectric element oscillating at the desired droplet frequency. As a result, the ink stream emerging from the nozzle becomes separated into droplets in a controlled manner. A voltage is applied to the nozzle so that the droplets are electrically charged, and their trajectory can then be influenced in any desired manner by the effects of an electric field through which the droplets are passing.

Two particular, specific requirements are made to an ink suitable for this printing method: The droplets which are generated must be capable of being sufficiently electrically charged, and their flight path and speed must be able to be predicted in a sufficiently precise manner over a predetermined path length starting from their point of generation.

The first requirement is generally only fulfilled by inks on an aqueous base. Since the printer is controlled in the simplest case only by putting the electric field on and off, the droplets being directed on the target, i.e. the substrate to be printed, when the field is switched off, and on the retaining shield screen when the field is switched on, it will be sufficient to guarantee a certain minimal effect of the electric field, i.e. a certain minimal charge of the droplets, as well as a sufficiently exact flight path when the field is off; the high dipole moment of water presents an advantage.

It is necessary to be able to precisely predict the position of the droplets on their flight path since the printing position will for example meander over the target, each droplet being assigned to a certain predetermined destination point already at the moment of its formation. Thus, in order to generate or prevent, respectively, a printing dot at a predetermined location, it will be necessary to pilot each individual droplet precisely onto the target or, respectively, to deflect it in the direction of the wall or screen. It has been found during the development of this printing technique that water generally fulfills this requirement too. Consequently, inks have been developed on an aqueous base which contain dissolved dyestuffs. However,. such inks present the drawback that the choice of water soluble dyestuffs is very limited, and a great many of applications have requirements which can only be fulfilled by dyestuffs or pigments which are water insoluble. Such dyestuffs and pigments are designed in the following as "insoluble colouring agents".

Document EP 0 604 822 describes an aqueous ink jet composition comprising a pigment dispersion, an aqueous carrier medium, a cosolvent mixture and a cyclic amide which has good print quality.

Especially for a high resolution (colour) printing where, inter alia, a high droplet rate is used, inaccuracies in the control of the droplets produce distinct deficiencies in the printing result. Faults are particularly apparent when the colour depth of a surface is controlled by a more or less thinned dot screen, each screen dot being produced by one sole droplet. In this case, clearly visible blots are produced if the droplet control is not perfect.

### Summary of the Invention

A major object of the present invention is to provide a printing ink, appropriate for high resolution continuous ink jet printing, which contains water as a major liquid component, at least one dispersed, particulate colouring agent selected from pigments and water insoluble dyestuffs, and additives for stabilizing and/or adjusting the physical properties of the ink, in particular its rheology. The ink according to the invention is characterized by the fact that substantially all these additives have a weight average molecular weight below about 20,000. The ink contains first additives wherein hydrogen atoms that are capable of forming hydrogen bridges (especially hydroxy or amino hydrogen) represent more than about 5 % of the number of atoms in the molecule, have a weight average molecular weight below about 1,000. Furthermore, the particles of said colouring agents have such a size distribution that less than 10 % of the total number of the particles is greater than 200 nm, and less than 3 % of said total number is greater than 300 nm.

It has already been tried to formulate inks for the continuous ink jet printing having therein dispersed insoluble colouring agents; however, the results have been absolutely unsatisfactory. The ink droplets showed a very irregular velocity distribution, and their position on the trajectory were thus not sufficiently precisely predictable for the deflection, and this fact produced at least blurred, if not fully unusable, printing images. From this findings, it has been concluded that the addition of insoluble substances in dispersed form disturbs the splitting up of the ink jet into droplets in such a severe manner that such inks are in principle not suited for the continuous ink jet printing.

However, research efforts made by the inventors have shown that the problem is not primarily based on the presence of insoluble, dispersed particles; to the contrary, basic compositions for dispersion inks, i.e. for inks having colour pigments or dyestuffs dispersed therein, already show such an unsatisfactory behaviour prior to the addition of the colouring agent to be dispersed. It has been concluded therefrom that the problem is based on the different additives necessary or usual in dispersion printing inks. Further investigations have shown that the usually added surface active substances (surfactants), the polymers used for adjusting the viscosity, and the antifoaming agents are responsible for the negative behaviour of the inks. Starting from this knowledge, further research has shown that, on one hand, polymeric additives having a molecular weight of more than about 10,000 seriously impair the properties of a basic composition, and they render such compositions virtually unusable at a molecular weight of more than about 20,000. Furthermore, groups capable of forming hydrogen bridges, particularly hydroxy and amino groups, will strongly shift this limit to lower molecular weights. It has also been found that substances which contain hydrogen bridge forming hydrogen atoms in an appreciable extent may only be present as low molecular entities, for example up to a molecular weight of about 1,000 in order to not impair too much the usability.

In particular, molecules that contain hydrogen bridge active hydrogen atoms should only make up not more than about 3 % by weight of the ink, preferably not more than 1.5 %, if their molecular weight is higher than about 15,000, in order to maintain the usefulness of the ink for a high resolution printing. Lower proportions of these substances having a high molecular weight down to 0 % yield a continuous decrease of the detrimental influence of the hydrogen bridge active substances. A decrease of the molecular weights given above as reference points to lower values also improves the advantageous behavior.

Since, on one hand, glycol and, on the other hand, polymers having an average molecular weight of about 1,000 and with two terminal hydroxy or carboxy groups have been proven to be acceptable additives, and supposing that the hydrogen bridge active hydrogen atoms stem exclusively from hydroxy groups, a general rule for the expression "appreciable quantity of hydroxy groups" as used above can be given, namely a value of more than 5 % of the total number of the atoms in a molecule. Additives wherein more than 5 % of all atoms are hydrogen atoms that are capable of forming hydrogen bridges must therefore not have a molecular weight of more than 1,000, preferably of more than 500. It is also advantageous if this limitation is also observed for substances having a lower proportion of hydrogen bridge active hydrogen atoms.

A certain intermediate position is taken by substances which do not contain hydrogen bridge forming hydrogen atoms but contain positions which may participate in hydrogen bridging, for example ether linkages.

The presence of the following usual ink additives has proven particularly disadvantageous: polyvinyl alcohol, hydroxylalkylcelluloses, e.g. hydroxylpropylcellulose, and polyvinyl pyrrolidone.

Another parameter of great importance is the size of the particles. Since the colouring agents are milled, a mixture of particles of the most different sizes is obtained; the mixture may be characterized by an average particle size and a distribution of the particle sizes around an average value. As a general rule, an approximately binomial distribution is obtained. In the following, the averages and the distribution widths are given by volume if not otherwise indicated.

It has now been found that particles having a diameter of more than 200 nm are disadvantageous, and particles having a diameter exceeding 300 nm must only be present in very small amounts. The average particle size does not exceed 100 nm and should better be smaller. As a general guideline for a good ink, average particle sizes of from 68 to 81 nm in connection with distribution widths of 61 to 63 nm should be used. These values are determined as described below.

The invention will now be explained in further detail by way of the following description of particular exemplary embodiments and of the Figures in the drawing.

### Brief Description of the Drawings

In the drawing:
- Fig. 1: shows the determination of the broadening proportion R = d∥/d⊥,
- Fig. 2 and 3: show stroboscope photographs of an ink droplet jet, and

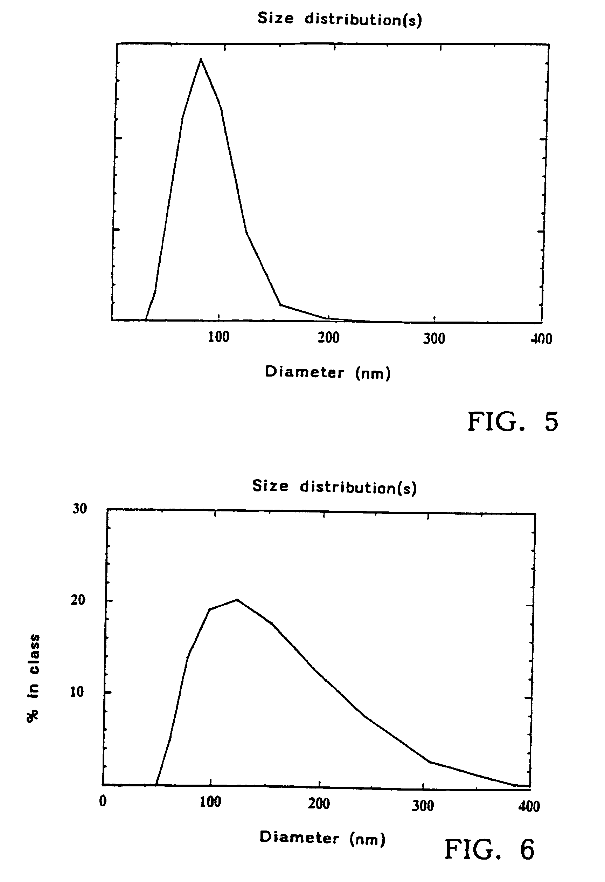

- Fig. 4 to 6: show size distributions of colouring agent particles.

### Detailed Description of the Invention

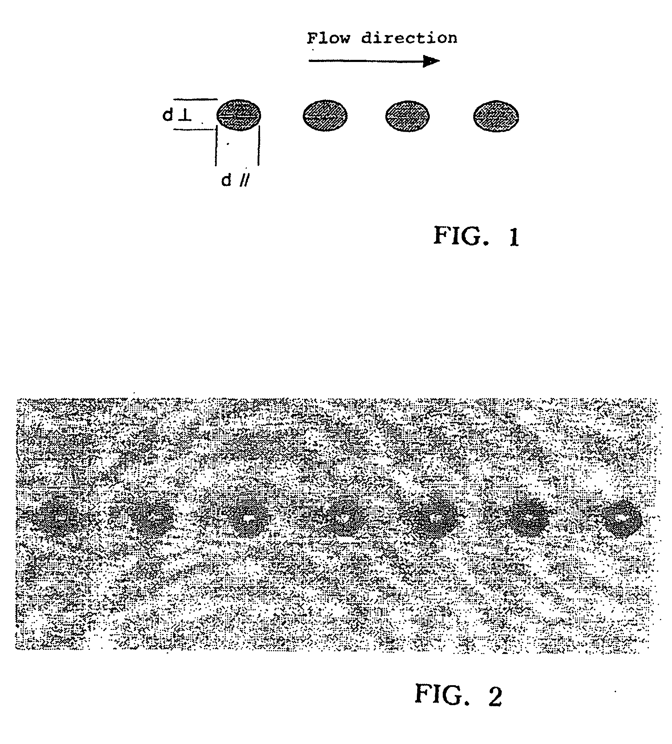

The property of a base composition optimized according to the above described findings is shown in Fig. 1. For the establishment of the outlined data, a currently employed continuous ink jet printing apparatus was used. The ink jet is pressed through a nozzle which is coupled to a piezoelectric oscillator. The oscillator is excited with the desired droplet frequency and puts the nozzle in oscillations which dissolve the ink jet leaving the nozzle into droplets.

The droplets are observed by means of a stroboscope and a video camera. The stroboscobe produces light flashes having the droplet fequency with which the ink jet is illuminated (M. Ronay, J. of Colloid and Interface Science **66/1** (1978), 55). Depending on the particular ink, droplets with sharp outlines are observed, and the droplets appear to get more and more broadened in the direction of flow. This broadening is expressed as the relation R between the width d∥ and the height d⊥ (Fig. 1). The measuring is made in a predetermined distance d_{Obs} from the exit opening of the nozzle. In the frame of this specification, the readings are taken at a distance d_{Obs} = 8 mm.

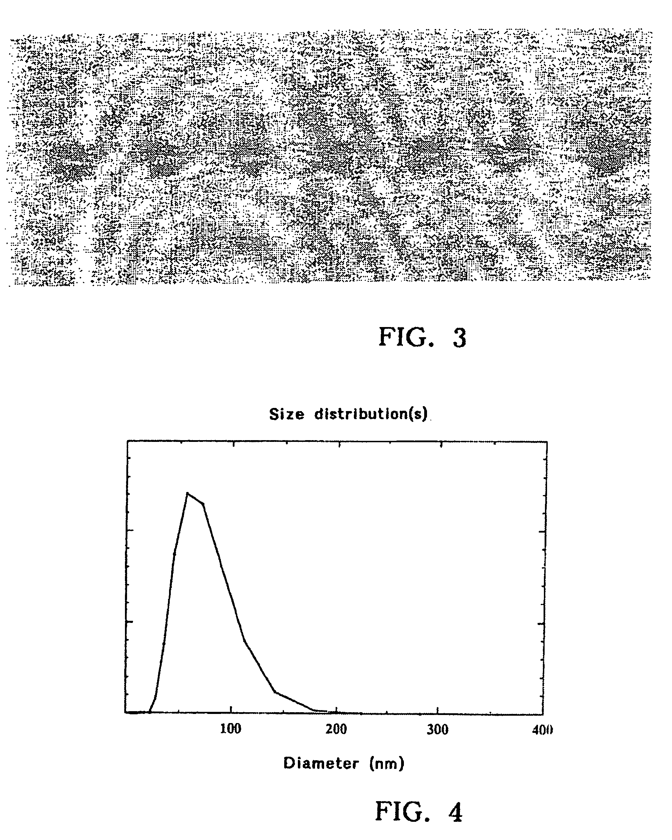

A value of R = 1 is the optimum in all cases, which is reached by, e.g., water. Under the above mentioned measuring conditions (a distance of 8 mm from the nozzle), an ink showing values up to R = 1.1 is to be considered as very good, i.e. even at droplet rates of more than 100,000 s⁻¹ up to 1'000,000 s⁻¹ and nozzle diameters of less than the usual 75 µm, in particular smaller than 50 µm and even about 20 µm. Stroboscope photographs are shown in Fig. 2 for R=1 and in Fig. 3 for R=1.4

The determination of the particle sizes was made by means of PCS (photon correlation spectroscopy). The measuring apparatus was a MALVERN MASTERSIZER LoC (MALVERN). The distribution of the particle sizes was determined according to the method of Pike-Ostrowsky. By this measuring apparatus, the volume fraction of the particles in dependence of their size is determined. The integration of the thereby obtained distribution of the particle sizes yields the total volume of particles in the test sample. Accordingly, the following data as to the fraction of particles of a certain size refer to the total volume of particles.

The following Table shows the dependence of R on the average diameter d of the particles and the distribution width:

**Table 1:**

| Influence of particle size and distribution on R | | | |
|---|---|---|---|
| Fig. | d [nm] | distribution width [nm] | R |
| 4 | 68 | 61 | 1 |
| 5 | 81 | 63 | 1.1 |
| 6 | 139 | 150 | 1.3 |

It follows from the Table that not more than 10 % of the colouring agent particles relative to the total volume of colouring agent particles may be greater than 200 nm, and not more than 3 % may be greater than 300 nm. Preferably, not more than 5 % are greater than 200 nm, and not more than 1 % are greater than 300 nm. Particularly preferred are maximal proportions of 2 % greater than 200 nm, and a nearly insignificant proportion (< 0.5 %) greater than 300 nm, or even narrower distributions. The average size of the particles is situated below 100 nm. Further improvements are possible by a further reduction to below 80 nm, especially in the range of from 60 to 70 nm or lower, if possible with parallel reduction of the distribution range of the particle sizes to preferably less than 100 nm, particularly to less than 70 nm.

Table 2 shows the influence of some possible additives to continuous jet inks as the change of the relation R due to these additives. As to the indicated molecular weight averages, a distribution can be supposed where at least 95 % are situated in the range of ±10 % of the average value. Broader distributions may render compulsory the use of an additive having a lower weight average molecular weight, especially when the proportion of molecules having a higher molecular weight increases due to the greater variation range.

**Table 2:**

| c: concentration of the additive, related to the total amount; MW: weight average molecular weight | | | |
|---|---|---|---|
| additive | | c (weight %) | R |
| hydroxypropyl cellulose | (MW = 60,000) | 3 | >3 |
| polyvinyl alcohol | (MW = 17,000) | 3 | 1.3 |
| " | (MW = 37,000) | 3 | 1.7 |
| " | (MW = 61,000) | 3 | >3 |
| polyvinyl pyrrolidone | (MW = 55,000) | 3 | 1.7 |

The hydroxyl group containing additives hydroxylpropylcellulose and polyvinyl alcohol have a strong influence on R already at low concentrations. Polyvinyl pyrrolidone behaves simularly; it does not contain hydrogen atoms obviously capable of forming hydrogen bridges, but it is able, by its ring nitrogen atom and the keto group, to participate in a hydrogen bridge. The effect seems thus to be smaller than with polyvinyl alcohol for example.

The effect is less pronounced with additives preferably containing ether bridges, for example polyethylene glycol and nonionic surfactive agents. The compounds glycerol and d-fructose could be added until an amount of 10 % without an essential influence on R although they contain hydroxyl groups.

As a result, it can be stated that hydroxyl group containing compounds and also amines and similar compounds should preferably only be added as low molecular additives and especially in unimolecular form. Compounds containing hydrogen bridge acceptors (e.g., oxygen in ether bridges) show a smaller effect on the visibility length and can be added as polymers of lower to moderate molecular weight. If the hydrogen bridge acceptor effect is weak, polymers having increasing molecular weights can be used.

The invention will now be explained further by way of examples.

### Example 1

As a general example, an ink which contains an insoluble coulouring agent in dispersed form and which can be used for the continuous ink jet process, is composed as follows:

| | |
|---|---|
| Dispersed dyestuff and/or pigment | 4 % |
| glycol | 4 % |
| nonionic tenside | 5.5 % |
| antifoaming agent | 0.03 % |
| water | remainder to 100 %. |

It has been possible, starting from the basic ink compositions of this invention, to produce inks which are well suited for the use in the continuous ink jet process, having a dyestuff or pigment content, respectively, of up to 10 %, referred to the total weight of the ink. Experience shows that such inks should contain at least from 3 to 6 % of dyestuff, values which are reached and exceeded with the present inks.

As nonionic surfactants in the above Example, those of the following list may be used. Tensides, antifoaming agents and also replacement substances for glycol can be found in the general knowledge on dispersion inks, the prejudice against the use of dispersed pigment dyestuffs in continuous ink jet inks having been surmounted by the present invention. Possible alternatives of the additives can for example be found in the publication by A. M. Wells, Printing inks: Recent developments, Noyes Data Corporation, 1976, p. 109 which is herewith incorporated by reference.

A non-exhaustive list of components indicated by way of example which may be present in the ink of this invention, is now to follow. The designations which are given are in most cases product names of the manufacturers.

### Colouring agent: dyestuffs

Lurafix Blue 590; Lurafix Blue 660; Lurafix Red 420; Lurafix Yellow 138: BASF, Ludwigshafen, Germany;
Sublaprint Navy 70017, Sublaprint Orange 70007, Sublaprint Orange 70020, Sublaprint Orange 70040, Sublaprint Red 70011, Sublaprint Scarlet 70021, Sublaprint Yellow 70000, Sublaprint Yellow 70004, Sublaprint Yellow 70064, Sublaprint Yellow 70069, Sublaprint Blue 70013, Sublaprint Blue 70014, Sublaprint Blue 70032, Sublaprint Blue 70037, Sublaprint Blue 70044, Sublaprint Crimson 70010: Hollidays Dyes & Chemicals, Huddersfield, UK;

### Colouring agent: pigments

Irgalite, Cromophtal: Ciba-Geigy AG, Basel, Switzerland; Hostaperm, Novoperm, Permanent: Hoechst AG, Frankfurt-on-the-Main, Germany;

### Drying retarders

Dipropylene glycol, 1,2-propylene glycol.

### Tensides

Nonionic tensides of the type
HO(CH₂OCH₂O)ₓ(CH(CH₃)CH₂O)_{y}(CH₂CH₂O)_{z}H; preferably x, y and z have values such that the molecular weight (weight average) of the substance is about 6,500;
Imbentin product line, especially Imbentin-PAP, Imbentin-TAM (tallow amine ethoxylate): Dr. W. Kolb, Hedingen, Switzerland;
Surfynol: Air Products and Chemicals Inc., Allentown, Penn., USA;
Atlox and Atlas product line: Imperial Chemical Industries P1C, London, UK.

### Anti-foaming agents

Drewplus T4202, TS4384, W4311, W4510: Drew Ind. Division, Drew Chemical Corp., Boonlon, N.J., USA;
Byk 032: Byk Mallinckrodt.

In the following, particularly preferred formulations and production methods of the inks according to this invention are given.

The percentages which are given here and in the following refer to the weight of the ink if not otherwise indicated.

### Example 2

| Component | amount |
|---|---|
| Dyestuff DR 60 (Color Index) | 3 % |
| dipropylene glycol (drying retarder) | 2.8 % |
| emulsifier WNS (Bayer AG, Leverkusen, Germany) | 4 % |
| antifoaming agent RD (Röhm GmbH, Darmstadt, Germany) | 0.03 % |
| water | remainder to 100 % |

### Example 3

| | |
|---|---|
| Component | amount |
| Phthalocyanine pigment | 5 % |
| dipropylene glycol | 4 % |
| Imbentin PAP (nonionic tenside) (Dr. W. Kolb AG, Hedingen, Switzerland) | 8 % |
| antifoaming agent RD | 0.03 % |
| water | remainder to 100 % |

The colouring agents are reduced to a powder having a particle size of less than about 200 nm and preferably less than 100 nm. Mills to be used for this comminution step are known, e.g. ball mills.

The inks of this invention can also be manufactured by methods principally known in the technique of ink production. A method which can be used for example is the following:
- Combining the ingredients and blending in adding a certain amount of water for adjusting the viscosity necessary for the following grinding;
- grinding until the desired fineness in a conventional mill, especially a ball mill;
- transfer into a mixer and addition of water until the water content according to the formulation is reached.

In order to obtain the preferred particle fineness of the colouring agent, it may be necessary to grind the mass several times on different mills so that the initial coarse comminution progresses to a fine grinding. It is further preferred to provide a particle size selection after the grinding process in order to ascertain a sufficient narrow distribution of the particle sizes and to reduce before all the proportion of too coarse particles. Methods known per se may be used in this step which therefore do not need to be described in detail.

Generally, it can be expected that inks which contain the colouring agents or part of them in another form than dissolved, for the continuous ink jet method can be formulated when additives according to the invention are selected and/or by employing colouring agent particles of the proposed size distribution.

Besides of hydroxy groups, amino groups are in particular to be considered as hydrogen bridge active.

The inks of the invention can generally be used for the printing on all substrates appropriate for the continuous ink jet printing, especially also on textile materials and sheet and web substrates, e.g. of paper, and for the production of thermotransfer patterns and designs. Since the present inks offer the possibility to use them up to high and the highest droplet rates of more than 100,000 s⁻¹, in particular up to 1'000,000 s⁻¹ and more, and at small droplet diameters by the use of narrow nozzles of less than 50 µm, especially down to 20 µm, absolutely exact and precise printings having a high contour sharpness can be produced. It is also possible to control the intensity of the colour shade of the ink by a more or less dispersed but even and regular application of the ink droplets without rendering visible a screen or halftone by the naked eye at normal observation. This renders possible the production of high quality polychrome printings having nearly continuous coulour graduations and shades.

## Claims

1. An ink for continuous ink jet printing, containing
- water as a major liquid component,
- at least one dispersed colouring agent in particle form, selected from the group comprising pigments and water insoluble dyestuffs
and
- additives for stabilizing the ink and/or for adjusting the physical properties of the ink, especially its rheology, selected from glycol, especially dipropylene glycol or 1,2-propylene glycol,
polymers having an average molecular weight of about 1,000 and two terminal hydroxy or carboxy groups,
nonionic tensides of the type HO(CH₂OCH₂O)ₓ (CH(CH₃)CH₂O)_{y}(CH₂CH₂O)_{z}H, wherein x, y and z are preferably selected in such a way that the average molecular weight of the substance is about 6,500
- wherein substantially all these additives have a weight average molecular weight below about 20,000,
- wherein the ink is free from additives
a.) where hydrogen atoms which are capable of forming hydrogen bridges, especially hydrogen atoms of hydroxyl or amino groups represent more than about 5% of the number of the atoms of the molecule and
b.) which at the same time have a weight average molecular weight above 1,000 such as polyvinyl alcohol, polyvinyl pyrrolidone or hydroxyalkylcelluloses
- and wherein the particles of said colouring agent have an average particle size of less than 100 nm and a distribution such that relative to the total volume of the particles, less than 10% is greater than 200 nm and less than 3% is greater than 300 nm.

2. The ink according to claim 1, wherein not more than 5%, preferably not more than 2%, of the total volume of the particles of the colouring agents is greater than 200 nm, and not more than 1%, preferably not more than 0.5%, is greater than 300 nm.

3. The ink according to claim 1 or 2, wherein the average particle size of the total of said colouring agents is situated in the range of less than 80 nm, in particular in the range of from about 60 to about 70 nm.

4. The ink according to any one of claims 1 to 3, wherein the distribution width of the particle size of the total of said colouring agents is smaller than or equal to about 100 nm.

5. The ink according to claim 4, wherein said distribution width is smaller than about 70 nm.

6. The ink according to any one of claims 1 to 5,
wherein the proportion of the total of colouring agents is about 1 to 10% by weight and preferably about 3 to 6% by weight of the ink.

7. The ink according to any one of claims 1 to 6, wherein the total of additives of said category supply to the ink not more than 3% by weight of molecules having a molecular weight greater than about 15,000 and not more than 1% by weight of molecules having a molecular weight greater than about 40,000.

8. The ink according to any one of claims 1 to 7,
wherein the ink is free from polyvinyl alcohol,
cellulose derivatives having free hydroxyl groups, and polyvinyl pyrrolidone.

9. The ink according to any one of claims 1 to 8, containing as additives at least one antifoaming agent, a viscosity controlling additive, and an additive for stabilizing the distribution of the colouring agent within the ink.

10. The ink according to one of the claims 1 to 10 comprising a drying retarder selected from the group comprising dipropylene glycol and 1,2-propylene glycol.

11. A process for the high resolution continuous ink jet printing comprising droplet rates of more than 100 kHz, particularly of from 10⁵ to 10⁶ Hz, and/or nozzles for the generation of the ink jet, having a diameter of less than or equal to 50 µm, wherein an ink is used according to any one of claims 1 to 10.

12. The process according to claim 11, where in textile substrates are printed.

13. The process according to claim 11 or 12, wherein multicolour thermotransfer patterns or direct multicolour printings are produced.

14. The use of an ink according to claim 1 in a high resolution continuous ink jet printer having droplet rate of more than 100 kHz, particularly of from 10⁵ to 10⁶ Hz, and nozzles for the generation of the ink jet, having a diameter of less than to 50 µm.

## Patentansprüche

1. Tinte zum Drucken mit einem kontinuierlichen Tintenstrahl, die folgendes enthält:
- Wasser als hauptsächlichen flüssigen Bestandteil,
- zumindest ein dispergiertes Färbemittel in Teilchenform, ausgewählt aus der Gruppe, die Pigmente und wasserunlösliche Farbstoffen enthält und
- Additive zum Stabilisieren der Tinte und/oder zum Einstellen der physikalischen Eigenschaften der Tinte, insbesondere ihrer Rheologie, ausgewählt aus Glykol, insbesondere Dipropylenglykol oder 1,2-Propylenglykol, Polymere mit einem mittleren Molekulargewicht von ungefähr 1.000 und zwei terminalen Hydroxy- oder Carboxygruppen, nichtionische Tenside des Typs HO(CH₂OCH₂O)ₓ (CH(CH₃)CH₂O)_{y} (CH₂CH₂O)_{z}H, wobei x, y und z vorzugsweise in einer solchen Weise ausgewählt sind, dass das mittlere Molekulargewicht der Substanz ungefähr 6.500 beträgt,
- wobei im wesentlichen alle diese Additive ein gewichtsgemitteltes Molekulargewicht unter ungefähr 20.000 aufweisen,
- wobei die Tinte frei von Additiven ist,
a) bei denen Wasserstoffatome, die zur Bildung von Wasserstoffbrücken in der Lage sind, insbesondere Wasserstoffatome von Hydroxyl- oder Aminogruppen mehr als ungefähr 5% der Anzahl der Atome des Moleküls repräsentieren und
b) die gleichzeitig ein gewichtsgemitteltes Molekulargewicht von über 1.000 aufweisen, wie beispielsweise Polyvinylalkohol, Polyvinylpyrrolidon oder Hydroxyalkylcellulosen,
- und wobei die Teilchen des Färbemittels eine durchschnittliche Teilchengröße von weniger als 100 nm aufweisen und eine derartige Verteilung, dass bezüglich des Gesamtvolumens der Teilchen weniger als 10% größer als 200 nm und weniger als 3% größer als 300 nm sind.

2. Tinte nach Anspruch 1, wobei nicht mehr als 5%, vorzugsweise nicht mehr als 2% des Gesamtvolumens der Teilchen des Färbemittels größer als 200 nm sind und nicht mehr als 1%, vorzugsweise nicht mehr als 0,5% größer als 300 nm sind.

3. Tinte nach Anspruch 1 oder 2, wobei die mittlere Teilchengröße der Gesamtheit der Färbemittel sich im Bereich von weniger als 80 nm, insbesondere im Bereich von ungefähr 60 bis ungefähr 70 nm bewegt.

4. Tinte nach einem der Ansprüche 1 bis 3, wobei die Verteilungsbreite der Teilchengröße der Gesamtheit der Färbemittel kleiner als oder gleich ungefähr 100 nm ist.

5. Tinte nach Anspruch 4, wobei die Verteilungsbreite kleiner als ungefähr 70 nm ist.

6. Tinte nach einem der Ansprüche 1 bis 5, wobei der Anteil der Gesamtheit der Färbemittel ungefähr 1-10 Gewichtsprozent und vorzugsweise ungefähr 3-6 Gewichtsprozent der Tinte beträgt.

7. Tinte nach einem der Ansprüche 1 bis 6, wobei die Gesamtheit der Additive dieser Klasse, die der Tinte zugeführt werden, nicht mehr als 3 Gewichtsprozent Moleküle mit einem Molekulargewicht von mehr als 15.000 und nicht mehr als 1 Gewichtsprozent Moleküle mit einem Molekulargewicht von mehr als 40.000 aufweist.

8. Tinte nach einem der Ansprüche 1 bis 7, wobei die Tinte frei von Polyvinylalkohol, Cellulosederivaten mit freien Hydroxylgruppen und Polyvinylpyrrolidon ist.

9. Tinte nach einem der Ansprüche 1 bis 8, die als Additive zumindest ein Entschäumungsmittel, ein viskositätskontrollierendes Additiv und ein Additiv zum Stabilisieren der Verteilung des Färbemittels in der Tinte enthält.

10. Tinte nach einem der Ansprüche 1 bis 9, die einen Trocknungsverzögerer umfasst, ausgewählt aus der Gruppe, die aus Dipropylenglykol und 1,2-Propylenglykol besteht.

11. Verfahren zum hochauflösenden kontinuierlichen Tintenstrahldrucken, das Tröpfchengeschwindigkeiten von mehr als 100 kHz, insbesondere von 10⁵-10⁶ Hz und/oder Düsen zur Erzeugung des Tintenstrahles umfasst, die einen Durchmesser von weniger als oder gleich 50 µm aufweisen, wobei eine Tinte gemäß einem der Ansprüche 1 bis 10 verwendet wird.

12. Verfahren nach Anspruch 11, wobei Textilsubstrate bedruckt werden.

13. Verfahren nach Anspruch 11 oder 12, wobei vielfarbige Thermotransfermuster oder vielfarbige Direktdrucke erzeugt werden.

14. Verwendung einer Tinte nach Anspruch 1 in einem hochauflösenden kontinuierlichen Tintenstrahldrucker mit einer Tröpfchengeschwindigkeit von mehr als 100 kHz, insbesondere von 10⁵-10⁶ Hz und mit Düsen zur Erzeugung des Tintenstrahls mit einem Durchmesser von weniger als 50 µm.

## Revendications

1. Encre pour une impression par jet d'encre en continu, contenant
- de l'eau en tant que composant liquide principal,
- au moins un agent colorant dispersé sous la forme de particules, choisi dans le groupe contenant de pigments et de colorants insolubles dans l'eau
et
- des additifs pour stabiliser l'encre et/ou pour ajuster les propriétés physiques de l'encre, en particulier sa rhéologie, choisis entre un glycol, en particulier du dipropylèneglycol ou du 1,2-propylèneglycol,
des polymères ayant un poids moléculaire moyen d'environ 1000 et deux groupes terminaux hydroxy ou carboxy,
des agents tensioactifs non-ioniques du type HO(CH₂OCH₂O)ₓ (CH(CH₃)CH₂O)_{y}(CH₂CH₂O)_{z}H, dans lequel x, y et z sont de préférence choisis d'une manière telle que le poids moléculaire moyen de la substance est d'environ 6500
- dans laquelle pratiquement tous ces additifs ont un poids moléculaire moyen en poids inférieur à environ 20 000,
- dans laquelle l'encre est exempte d'additifs
a.) où des atomes d'hydrogène qui sont capables de former des ponts hydrogène, en particulier des atomes d'hydrogène des groupes hydroxyle ou amino, représentent plus qu'environ 5 % du nombre d'atomes de la molécule et
b.) qui ont en même temps un poids moléculaire moyen en poids supérieur à 1000, tels que l'alcool polyvinylique, la polyvinylpyrrolidone ou les hydroxyalkylcelluloses
et dans laquelle les particules dudit agent colorant ont une dimension de particule moyenne inférieure à 100 nm et une répartition telle que par rapport au volume total des particules, moins de 10 % sont plus grandes que 200 nm et moins de 3 % sont plus grandes que 300 nm.

2. Encre selon la revendication 1, dans laquelle pas plus de 5 %, de préférence pas plus de 2 % du volume total des particules des agents colorants sont plus grandes que 200 nm, et pas plus de 1 %, de préférence pas plus de 0,5 % sont plus grandes que 300 nm.

3. Encre selon la revendication 1 ou 2, dans laquelle la dimension de particule moyenne de la totalité desdits agents colorants est comprise dans la plage inférieure à 80 nm, en particulier dans la plage d'environ 60 à environ 70 nm.

4. Encre selon l'une quelconque des revendications 1 à 3, dans laquelle la largeur de répartition de la dimension de particule de la totalité desdits agents colorants est inférieure ou égale à environ 100 nm.

5. Encre selon la revendication 4, dans laquelle ladite largeur de répartition est inférieure à environ 70 nm.

6. Encre selon l'une quelconque des revendications 1 à 5, dans laquelle la proportion de la totalité des agents colorants est d'environ 1 à 10 % en poids, et de préférence d'environ 3 à 6 % en poids de l'encre.

7. Encre selon l'une quelconque des revendications 1 à 6, dans laquelle la totalité des additifs de ladite catégorie fournissent à l'encre pas plus de 3 % en poids de molécules ayant un poids moléculaire supérieur à environ 15 000, et pas plus de 1 % en poids de molécules ayant un poids moléculaire supérieur à environ 40 000.

8. Encre selon l'une quelconque des revendications 1 à 7, dans laquelle l'encre est exempte d'alcool polyvinylique, de dérivés de cellulose ayant des groupes hydroxyle libres, et de polyvinylpyrrolidone.

9. Encre selon l'une quelconque des revendications 1 à 8, contenant en tant qu'additifs au moins un agent anti-mousse, un additif commandant la viscosité et un additif pour stabiliser la répartition de l'agent colorant dans l'encre.

10. Encre selon l'une quelconque des revendications 1 à 10, comprenant un retardateur de séchage choisi dans le groupe contenant du dipropylèneglycol et du 1,2-propylèneglycol.

11. Procédé pour l'impression par jet d'encre en continu haute résolution comprenant des débits de gouttelettes supérieurs à 100 kHz, en particulier de 10⁵ à 10⁶ Hz, et/ou des buses pour la génération du jet d'encre, ayant un diamètre inférieur ou égal à 50 µm, dans lequel une encre selon l'une quelconque des revendications 1 à 10 est utilisée.

12. Procédé selon la revendication 11, dans lequel des substrats de textile sont imprimés.

13. Procédé selon la revendication 11 ou 12, dans lequel des motifs de transfert thermique multicolores ou des impressions multicolores sont produits.

14. Utilisation d'une encre selon la revendication 1, dans une imprimante à jet d'encre en continu haute résolution ayant un débit de gouttelette supérieure à 100 kHz, en particulier de 10⁵ à 10⁶ Hz, et des buses pour la génération du jet d'encre, ayant un diamètre inférieur à 50 µm.
